# EUROPEAN PATENT APPLICATION

(11) **EP 4 556 885 A1**
(43) Date of publication of application: **21.05.2025**
(21) Application number: 24213177.9
(22) Date of filing: 15.11.2024
(51) Int. Cl.: G01N 3/08, G01N 3/62, G01N 3/04

(54) **ALIGNMENT APPARATUS AND METHODS FOR TESTING SYSTEM**

(30) Priority: 17.11.2023 US 202363600385 P; 13.11.2024 US 202418946507
(71) Applicant: Illinois Tool Works Inc., Glenview IL 60025 (US)
(72) Inventor: MEYER, Richard A., Glenview, 60025 (US); CHUA, David, Glenview, 60025 (US); ROGOTZKE, Riley August, Glenview, 60025 (US)
(74) Representative: HGF

(57) **Abstract**

A method of operating a testing machine includes obtaining first sensor outputs from a first load cell indicative of forces on sensors of the first load cell at a first end of a test specimen mounted in a first grip of the testing machine. The method further includes obtaining second sensor outputs from a second load cell indicative of forces on sensors of the second load cell at a second opposite end of the test specimen mounted in a second grip of the testing machine. Forces at the sensors of the first load cell and sensors of the second load cell are determined from the first sensor outputs and the second sensor outputs. The test specimen is coaxially aligned with the first and second grips along an axis by adjusting at least one of an alignment device of the testing machine or at least one of a position of the test specimen in the first or second grip.

## Description

### CROSS-REFERENCE TO RELATED APPLICATION

This application claims the benefit of priority from U.S. Provisional Patent Application No. 63/600,385, filed November 17, 2023 for "Alignment Apparatus and Methods for Testing System," the content of which is hereby incorporated by reference.

### BACKGROUND

The discussion below is merely provided for general background information and is not intended to be used as an aid in determining the scope of the claimed subject matter.

Test machines or apparatus are used to test parameters and/or performance of materials, components, consumer products, electronics, materials, as well as medical and other devices (i.e. test specimens). Typically, test machines include one or more actuators to apply input loads and displacement. Specimens are held in grips, and alignment issues can cause problems with specimen damage and/or incorrect measurements.

### SUMMARY

This Summary and the Abstract herein are provided to introduce a selection of concepts in a simplified form that are further described below in the Detailed Description. This Summary and the Abstract are not intended to identify key features or essential features of the claimed subject matter, nor are they intended to be used as an aid in determining the scope of the claimed subject matter. The claimed subject matter is not limited to implementations that solve any or all disadvantages noted in the Background.

In one aspect, a method of operating a testing machine includes obtaining first sensor outputs from a first load cell indicative of forces on sensors of the first load cell at a first end of a test specimen mounted in a first grip of the testing machine. The method further includes obtaining second sensor outputs from a second load cell indicative of forces on sensors of the second load cell at a second opposite end of the test specimen mounted in a second grip of the testing machine. Forces at the sensors of the first load cell and sensors of the second load cell are determined from the first sensor outputs and the second sensor outputs. The test specimen is coaxially aligned with the first and second grips along an axis by adjusting at least one of an alignment device of the testing machine or at least one of a position of the test specimen in the first or second grip.

Implementations may include one or more of the following features. The afore-mentioend method where coaxially aligning at an alignment device of the testing machine may include moving one of the first or the second grips of the testing machine. Coaxially aligning may include adjusting one of the first and second grips laterally in at least one of two directions orthogonal to the axis. Coaxially aligning the test specimen may include adjusting the test specimen orientation or angle in at least one of the first or second grips to within a tolerance of the testing machine.

Obtaining first sensor outputs from a first load cell indicative of forces on sensors of the first load cell at a first end of a test specimen may include sensing a first force in a first lateral direction and a second lateral direction orthogonal to the first lateral direction. Forces on sensors of the first load cell can be sensed using various type of strain sensing sensors such as but not limited to strain gauges. Obtaining second sensor outputs from a second load cell indicative of forces on sensors of the second load cell at a second opposite end of the test specimen may include sensing second forces in the first lateral direction and the second lateral direction. Forces on sensors of the second load cell can be sensed using various type of strain sensing sensors such as but not limited to strain gauges.

If desired, coaxially aligning may include reducing lateral forces in at least one of the first and the second lateral directions.

The method may include applying a load to the test specimen, and in particular, measuring lateral forces on the test specimen during testing and/or after testing to determine misalignment. Determining misalignment may include determining a type of bend in the test specimen using determined moments from the first sensor outputs and the second sensor outputs. Determining a type of bend may include determining an s type bend from moments at opposite ends of the test specimen that are in opposite directions and determining a c type bend from moments at opposite ends of the test specimen that are in a same direction.

In another aspect, a load cell for use in a tensile testing machine includes a load cell body configured to engage a grip at a first end thereof and one of a load cell for the testing machine or an actuator for the testing machine at an second opposite end thereof along a axis extending from the first end to the second end.

Implementations may include one or more of the following features. The load cell body may include a set of first sensors configured to sense a first force in a first lateral direction orthogonal to the axis, and a set of second sensors configured to sense a second force in a second lateral direction orthogonal to the first lateral direction and orthogonal to the axis. The load cell body may include a set of first sensors operably coupled to the flexure and configured to sense the first force in the first lateral direction orthogonal to the axis, and a set of second sensors operably coupled to the flexure and configured to sense the second force in the second lateral direction orthogonal to the first lateral direction and orthogonal to the axis. The set of first sensors can be various type of strain sensing sensors such as but not limited to strain gauges. Likewise, the set of second sensors can be various type of strain sensing sensors such as but not limited to strain gauges. The load cell body may include a moment restraint connected to the first end and the second end, the moment restraint being configured to inhibit rotation of the first end or the second end about the axis.

In another aspect, a method of alignment of a test specimen in a testing machine includes mounting the test specimen in grips of the testing machine, and applying a load to the test specimen. Lateral forces on the test specimen are measured during testing and/or after testing to determine misalignment.

This summary is not intended to describe each disclosed embodiment or every implementation of sensing lateral forces and adjusting alignment of a test specimen or elements of a testing machine. Many other novel advantages, features, and relationships will become apparent as this description proceeds. The figures and the description that follow more particularly exemplify illustrative embodiments.

### BRIEF DESCRIPTION OF THE DRAWINGS

FIG. 1 is a schematic illustration of a testing machine for controlling operation of a test apparatus;
FIG. 2 is a block diagram of a computer on which embodiments of the present disclosure may be practiced;
FIG. 3 is an elevation view of a grip and sensor assembly according to an embodiment of the present disclosure;
FIG. 4 is a front elevation view of a pair of load cells according to an embodiment of the present disclosure;
FIG. 5 is an isometric view of the pair of load cells illustrated in FIG. 4;
FIG 6 is a section view of a load cell taken along lines 6-6 of FIG. 4;
FIGS. 7-8 are circuit diagrams of Wheatstone bridges used for measuring lateral displacement forces in embodiments of the present disclosure;
FIG. 9 is an isometric view of a load cell with a moment restraint according to an embodiment of the present disclosure;
FIG. 10 is a front elevation view of the load cell with moment restraint of FIG. 9;
FIG. 11 is a flow chart diagram of a method according to an embodiment of the present disclosure; and
FIG. 12 is a diagram of an asymmetrical specimen for which embodiments of the present disclosure may provide analysis.

### DETAILED DESCRIPTION OF ILLUSTRATIVE EMBODIMENTS

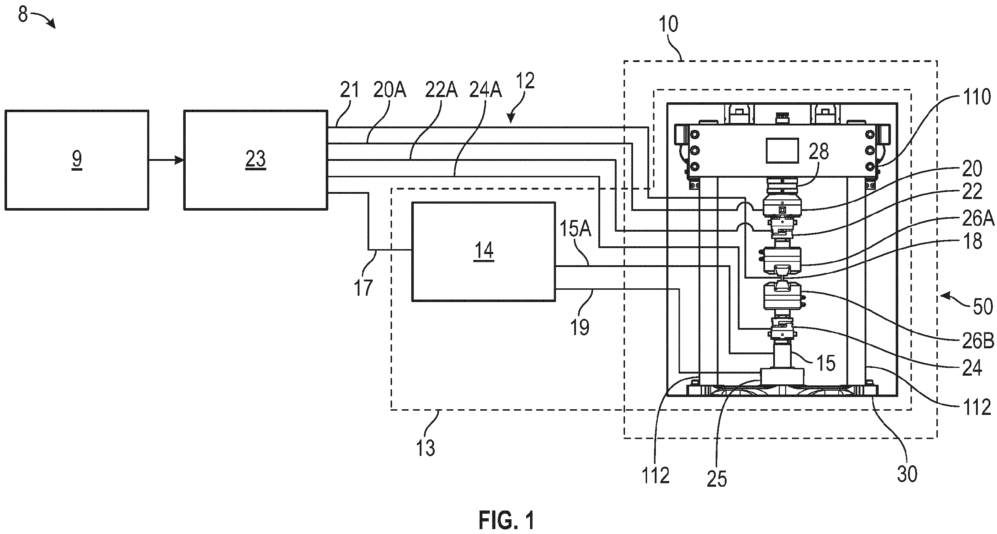

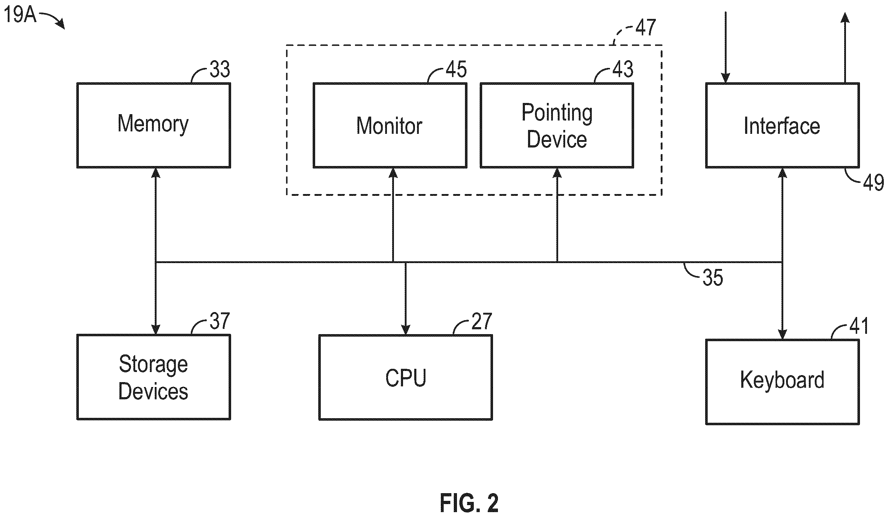

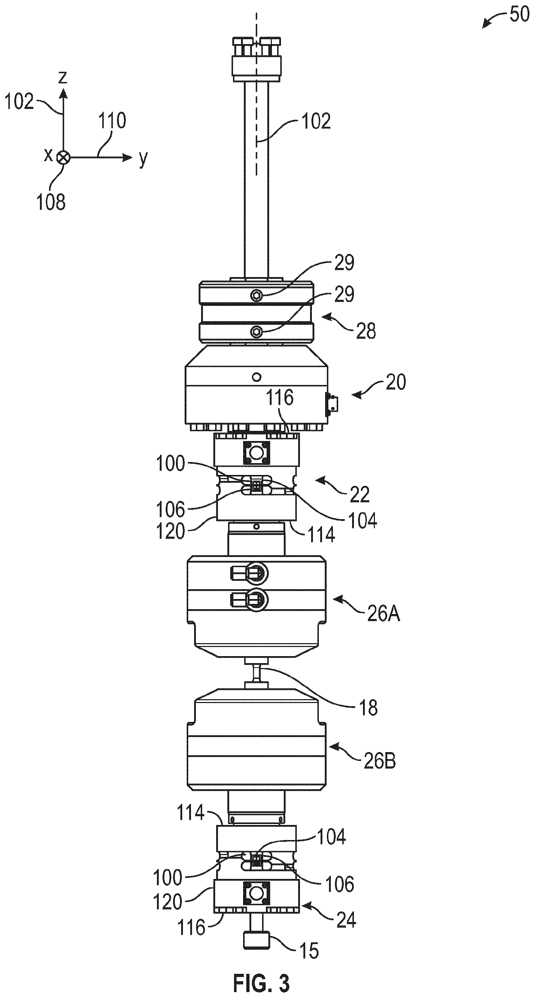

FIG. 1 illustrates a testing machine system 8, according to one embodiment, the testing machine system 8 comprising a computing device 9 for generating a GUI 47 (FIG. 2) that allows a user to interact and/or control a test machine 12, and/or calibrate or adjust a test machine 12. Test machine 12 includes a plant or physical system 10. In the exemplary embodiment, the physical system 10 generally includes a controllable element such as an actuator system, motor or the like. As illustrated in FIG. 1, the actuator system or assembly 13 includes a controller 14, an actuator 15 (hydraulic, pneumatic and/or electric), and mechanisms coupling actuators to any moveable member for imparting displacements or loads upon a test specimen 18. Coupling mechanisms include in one embodiment specimen grips for holding a specimen. Further components include one or more transducers 20, 22, and 24 as described below, to measure various loads, including for example loads in three orthogonal directions, along an axis of the specimen (transducer 20), and along two additional axes orthogonal to each other and to the axis of the specimen. These axes may be referred to as the z-axis 102 (along an axis of the specimen), and the x-axis 108 and y-axis 110 (shown for example in FIG. 3).

In the schematic illustration of FIG. 1, the actuator system 13 is represented by actuator 15 (located in a base 30 not shown in its entirety) that in turn represents one or more actuators in any test machine that are coupled to the test specimen 18 directly or indirectly. The controller 14 provides an actuator command signal 19 to a controlled device 25 (schematically shown, e.g. servo valve, power controller) to operate the actuator 15, which in turn, excites the test specimen 18. It should be noted the controller 14 is of a design suitable for controlling the type of actuator employed. Suitable feedback 15A can be provided from the actuator 15 to the controller 14 or from other sensors. One or more remote transducers on the test specimen 18 or physical system 10, such as displacement sensors, strain gauges, accelerometers, load cells, thermometers or the like, provide a measured or actual response 21 to system controller 23. In the exemplary embodiment, load cells 20, 22, and 24 provide responses 20A, 22A, and 24A to system controller 23 (and can be considered part of the actual response 21 but the signals 20A, 22A, 24A are shown separately). system controller 23 receives actual response 21 as feedback in a response to a drive 17 as input to the servo controller 14. In the illustration of FIG. 1, signal 17 is a reference signal, signal 19 is a manipulated variable (command to actuated device) and signal 15A is a feedback variable. Although illustrated in FIG. 1 for the single channel case, multiple channel embodiments with signal 15A comprising N feedback components and the signal 19 comprising M manipulated variable components are typical and considered another embodiment of the present invention. The test specimen 18 can take any number of forms such as but not limited to material samples, substructures or components. Typically, types of loads that can be applied or imparted to the test specimen 18 include tension, compression and/or torsion in one or more degrees of freedom applied separately or at the same time. The test specimen 18 can also or alternatively be subjected to controlled displacements in one or more degrees of freedom applied separately or at the same time. While the actuator 15 and controlled device 25 are shown at a bottom or base 30, it should be understood that the actuator 15 or additional actuator(s) can be located or connected to a crosshead 110. This may entail a grip and sensor assembly 50 (see FIG. 3 and discussed further below) to be inverted in the testing machine without departing from the scope of the disclosure.

The computing device 9, controller 14 and system controller 23 can each be implemented on a digital and/or analog computer. FIG. 2 and the related discussion provide a brief, general description of a suitable computing environment in which the computing device 9, controller 14 and system controller 23 may each be implemented. Although not required, the test computing device 9 will be described, at least in part, in the general context of computer-executable instructions, such as program modules, being executed by a computer 19A. Generally, program modules include routine programs, objects, components, data structures, etc., which perform particular tasks or implement particular abstract data types. Those skilled in the art can implement the description below and/or block diagrams to computer-executable instructions storable on a computer readable medium. Moreover, those skilled in the art will appreciate that the invention may be practiced with other computer system configurations, including multi-processor systems, networked personal computers, mini computers, main frame computers, and the like. Aspects of the invention may also be practiced in distributed computing environments where tasks are performed by remote processing devices that are linked through a communications network. In a distributed computer environment, program modules may be located in both local and remote memory storage devices.

The computer 19A illustrated in FIG. 2 comprises a conventional computer having a central processing unit (CPU) 27, memory 33 and a system bus 35 , which couples various system components, including memory 33 to the CPU 27. System bus 35 may be any of several types of bus structures including a memory bus or a memory controller, a peripheral bus, and a local bus using any of a variety of bus architectures. The memory 33 includes read only memory (ROM) and random access memory (RAM). A basic input/output (BIOS) containing the basic routine that helps to transfer information between elements within the computer 19A, such as during start-up, is stored in ROM. Storage devices 37, such as a hard disk, a floppy disk drive, an optical disk drive, etc., are coupled to the system bus 35 and are used for storage of programs and data. It should be appreciated by those skilled in the art that other types of computer readable media that are accessible by a computer, such as magnetic cassettes, flash memory cards, digital video disks, random access memories, read only memories, and the like, may also be used as storage devices. Commonly, programs are loaded into memory 33 from at least one of the storage devices 37 with or without accompanying data.

Input devices such as a keyboard 41 and pointing device (mouse) 43, or the like, allow the user to provide commands to the computer 19A. A monitor 45 or other type of output device is further connected to the system bus 35 via a suitable interface and provides feedback to the user. If the monitor 45 is a touch screen, the pointing device 43 can be incorporated therewith. The monitor 45 and typically an input pointing device 43 such as mouse together with corresponding software drivers form a graphical user interface (GUI) 47 for computer 19A that is particularly useful with aspects described below.

Interfaces 49 on each of the computing device 9 and system controller 23 allow communication between the computing device 9 and the system controller 23. Likewise, interfaces 49 on each of the system controller 23 and the controller 14 allow communication between the system controller 23 and the controller 14. Interface 49 also represents circuitry used to send signals 19 or receive signals 15 and 21 as described above as well as other parameters of the physical system such as the status of locks, doors, indicators, whether power is applied, etc. Commonly, such circuitry comprises digital-to-analog (D/A) and analog-to-digital (A/D) converters as is well known in the art. The controller 14 can also comprise an analog controller with or without digital supervision as is well known. Functions of computing device 9, controller 23 and controller 14 can be combined into one computer system. In another computing environment, controller 14 is a single board computer operable on a network bus of another computer, which could be controller 23 or another supervisory computer. The schematic diagram of FIG. 2 is intended to generally represent a computer for these and other suitable computing environments.

In the exemplary embodiment of FIG. 1, the testing machine 12 includes the crosshead 110 that is movable on vertical columns 112. Locks selectively clamp the crosshead 110 to the vertical columns 112 so as to provide a rigid reaction structure. Position sensors monitor the actual state of each of the locks and provides a corresponding output signal, the status of which is communicated to computing device 9.

In yet a further exemplary embodiment, the actuator assembly 13 can operatively couple one or more actuators to the crosshead 110, the movement of which imparts loads on the test specimen 18 in the alternative, or in addition to actuator 15. Therefore, a testing machine as used herein and the actuator assembly 13 can include various forms of couplers, links, bell cranks and the like, if desired.

It should be noted that the same reference numerals are used in different Figures for same or similar elements. It should also be understood that the terminology used herein is for the purpose of describing embodiments, and the terminology is not intended to be limiting. Unless indicated otherwise, ordinal numbers (e.g., first, second, third, etc.) are used to distinguish or identify different elements or steps in a group of elements or steps, and do not supply a serial or numerical limitation on the elements or steps of the embodiments thereof. For example, "first," "second," and "third" elements or steps need not necessarily appear in that order, and the embodiments thereof need not necessarily be limited to three elements or steps. It should also be understood that, unless indicated otherwise, any labels such as "left," "right," "front," "back," "top," "bottom," "forward," "reverse," "clockwise," "counter clockwise," "up," "down," or other similar terms such as "upper," "lower," "aft," "fore," "vertical," "horizontal," "proximal," "distal," "intermediate" and the like are used for convenience and are not intended to imply, for example, any particular fixed location, orientation, or direction. Instead, such labels are used to reflect, for example, relative location, orientation, or directions. It should also be understood that the singular forms of "a," "an," and "the" include plural references unless the context clearly dictates otherwise.

Referring now to FIG. 3, further detail of the physical system 10 and the components therein is shown. As illustrated in FIG. 3, the grip and sensor assembly 50 is shown. The grip and sensor assembly 50 comprises elements of the physical system that are measuring loads, holding test specimen 18 and imparting loads on a specimen 18, the specimen 18 when mounted in the grips, and adjustment elements for adjustment, for example, of alignment of the physical system 10, particularly with respect to a z-axis 102 in the embodiment illustrated. Specifically, in one embodiment, the grip and sensor assembly 50 comprises a number of components along the z-axis 102, including, for example, elements 28, 20, 22, 26A, 18, 26B, and 24. Element 28 is an adjustment element or device with, for example, set screws 29 movable to adjust the alignment of the testing system laterally in the x-direction 108 and/or y-direction 110. Adjustment element 28 is shown adjacent or connected to z-axis load cell 20, which is used for measuring forces along z-axis 102. First lateral sense load cell 22 is adjacent or connected to load cell 20, and has sensors 104 for measuring forces along the x-axis 108 and sensors 106 for measuring forces along the y-axis 110 at a first end of test specimen 18 mounted in first grip 26A.

In many cases, the adjustment element 28 is mounted on an end of the grip and sensor assembly 50 opposite the actuator 15, or in other words adjacent to the grip that is substantially stationary herein being mounted to the crosshead 110. However, in an alternative embodiment, if the actuator 15 is mounted in the crosshead 110, then it may be desirable to mount the adjustment element 28 to the base 30. In many applications, mounting the adjustment element 28 to the stationary or reaction element of the testing machine 12 is preferred so as not to have an additional moving mass during testing. Nevertheless, it should be understood that this is not limiting and the adjustment element 28 can be mounted to the actuator 15 if desired.

First lateral sense load cell 22 is shown with an end 114 adjacent or connected to the grip 26A and an opposite end 116 adjacent or connected to z-axis load cell 20. Specimen 18 is mounted at one end in grip 26A and is also mounted at a second end in second grip 26B, which is in turn adjacent or connected to second lateral sense load cell 24, which also has sensors 104 for measuring forces along the x-axis 108 and sensors 106 for measuring forces along the y-axis 110 at a second end of test specimen 18 mounted in second grip 26B. Second lateral sense load cell 24 can be substantially the same as first lateral sense load cell 22 and is shown with its end 114 adjacent or connected to the grip 26B and its end 116 adjacent or connected to the actuator 15.

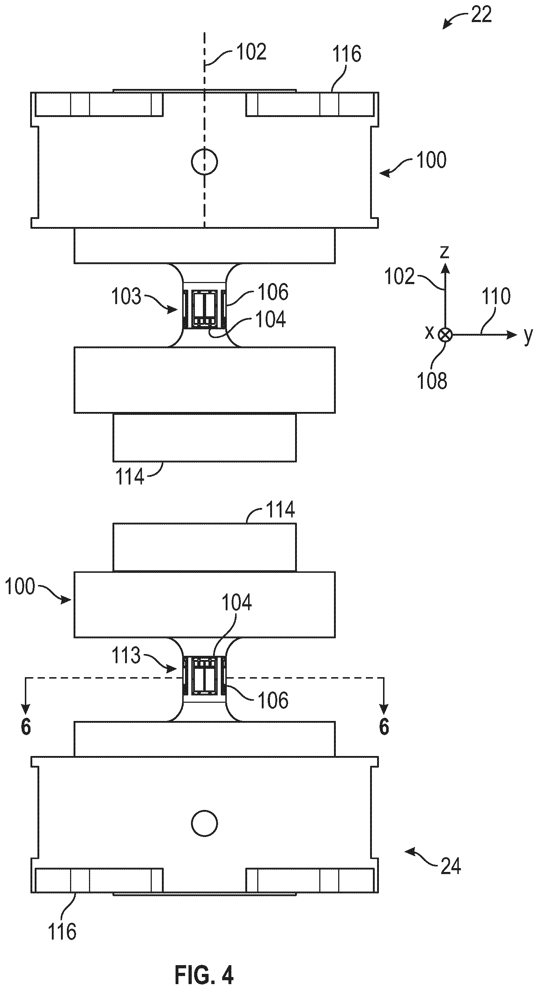

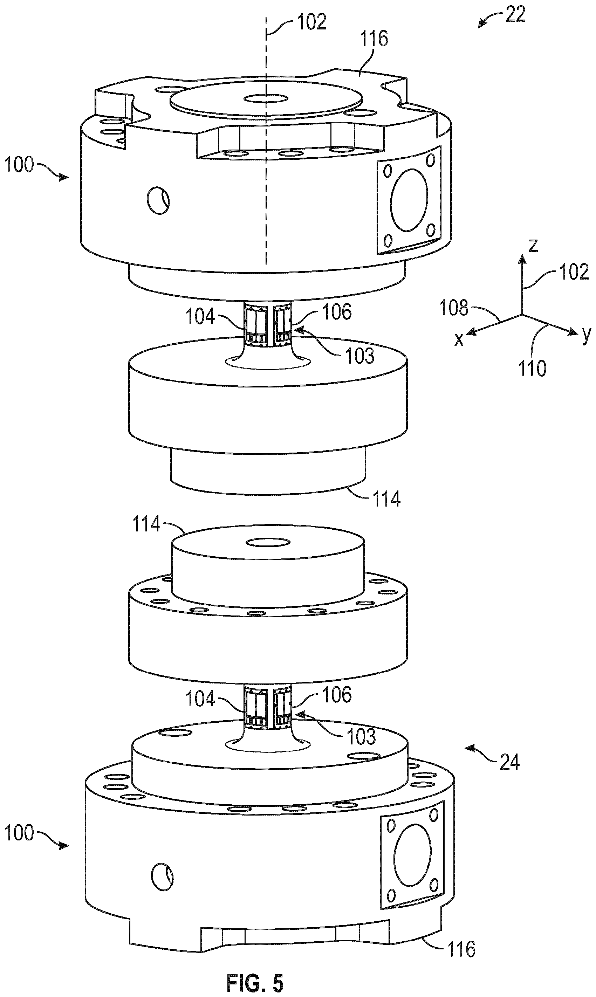

FIG. 4 is a front elevation view of first sense load cell 22 and second sense load cell 24 isolated from the rest of the grip and sensor assembly 50. FIG. 5 is an isometric view of the first sense load cell 22 and second sense load cell 24 of FIG. 4. In one embodiment, first sense load cell 22 and second sense load cell 24 are identical, but inverted with respect to one another in the grip and sensor assembly 50.

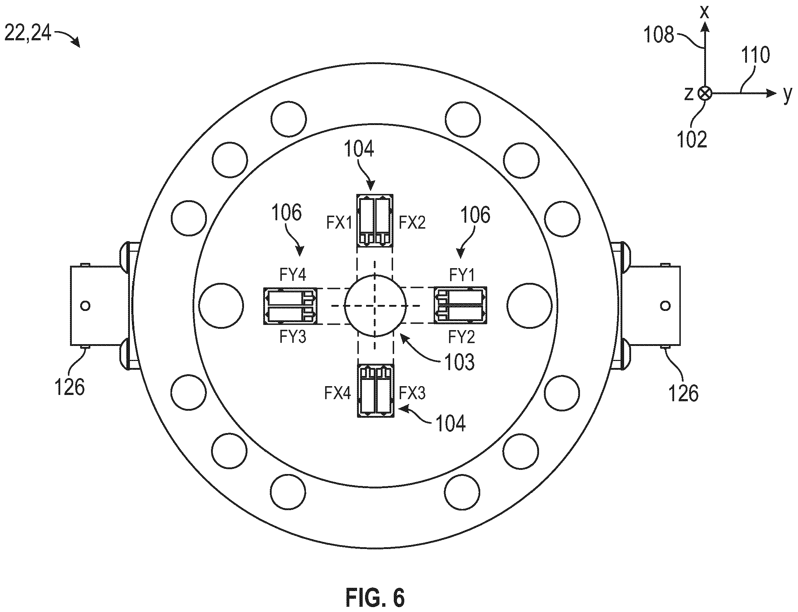

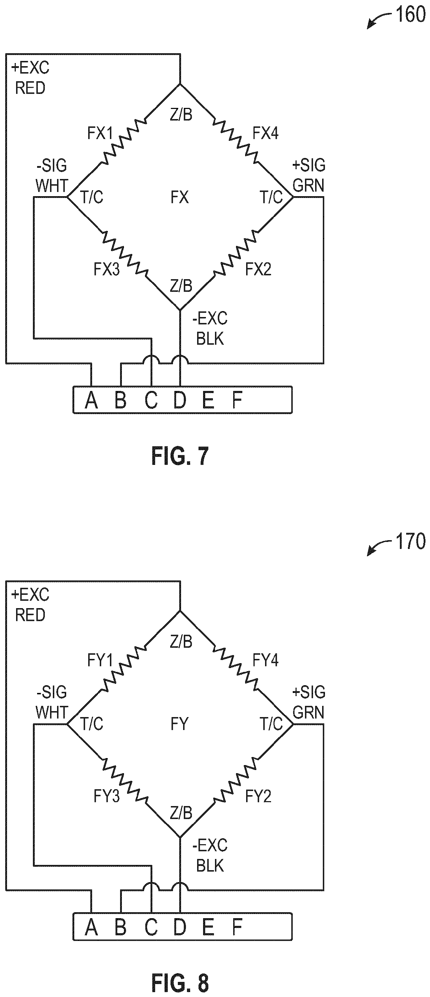

FIG. 6 is a section view of load cell 24 (load cell 22 being substantially identical) along line 6-6 of FIG. 4. FIG. 6 shows one layout of sensors 104 and 106 in load cell 22, 24. Sensors 104, measuring lateral forces on the x-axis 108, form the branches of a conventional Wheatstone bridge 160 as shown in FIG. 7. Sensors 106, measuring lateral forces on the y-axis 110, form the branches of a conventional Wheatstone bridge 170 as shown in FIG. 8. Using these forces for each of the two load cells 22, 24 allows determination of alignment issues with respect to the specimen 18.

Each load cell 22, 24, is shown usable in a tensile testing machine 12. Each load cell 22, 24 comprises, in one embodiment a load cell body 100 configured to engage a grip 26 at the first end 114 thereof. At the second opposite end 116 thereof, the load cell body is configured to engage one of a load cell 24 of the testing machine 12 or an actuator 15 for the testing machine 12 along the axis 102 extending from the first end 114 to the second end 116. The load cell body 100 includes a flexure 103 joined to and extending along the axis 102. The flexure 103 is compliant for a force in the x-direction 108, which is orthogonal to the axis 102 as well as compliant for a force in the y-direction 110 direction, which is orthogonal to the x-direction and orthogonal to the axis 102. The flexure 103 is stiff for forces along the axis 102 to transfer loads to the specimen 18. The load cell body 100 comprises in one embodiment the set of first sensors 104 and the set of second sensors 106. The set of first sensors 104 is configured to sense a first force in a first lateral (x-axis) direction 108 orthogonal to the axis 102. The set of second sensors 106 is configured to sense a second force in a second lateral (y-axis) direction 110 orthogonal to the first lateral direction 108 and orthogonal to the axis 102. The sensors 104, 106 of the load cell 22, 24 can take numerous forms as is known in the art. Typically, the sensors 104, 106 are strain gauges; however, other sensors such as but not limited to capacitively based or optically based sensors can be used.

Using two transducers, each having two orthogonal measurement axes, allows for determination of a type of bend in a test specimen with respect to each axis, for example an "S" type bend, or a "banana" or "C" type bend, in either or both axes. In particular, moments at specimen ends that are in the same direction represent a "banana" or "C" type bend, whereas moments at specimen ends that are in opposite directions represent an "S" type bend. Since there exist two orthogonal directions, the type of bend is independent in each direction. Hence, a test specimen can exhibit bending in none, one, or two directions, each direction being an "S" or "C" type bend.

Each load cell 22, 24 may further comprise a moment restraint 120 connected to the first end 114 and the second end 116 of its respective load cell 22, 24. The moment restraint 120 is configured in one embodiment to inhibit rotation of the first end 114 and/or the second end 116 about the axis 102. The moment restraint 120 is advantageous because it protects the flexure 103 from moments about the axis 102. Likewise, the moment restraint 120 transfers moments about the axis 102 to the test specimen 18 if desired.

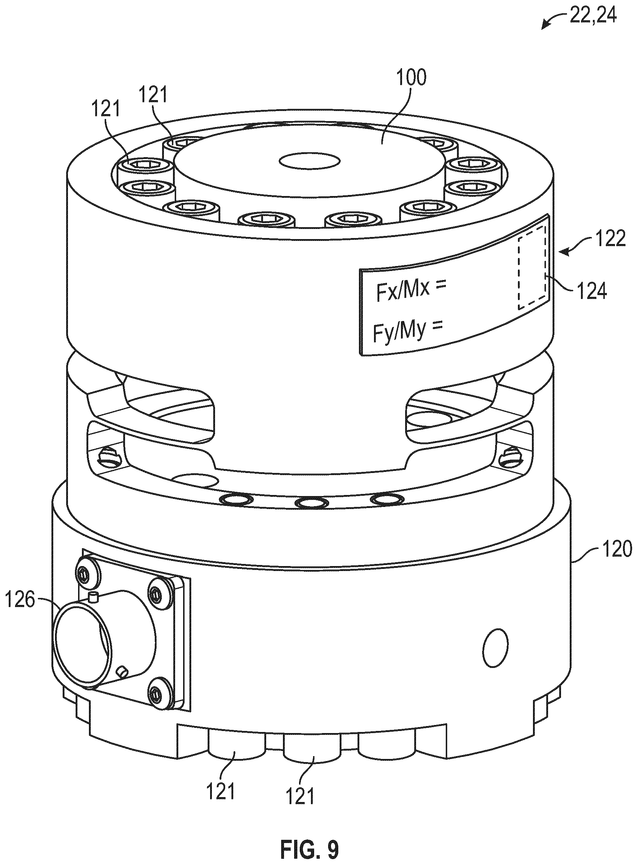

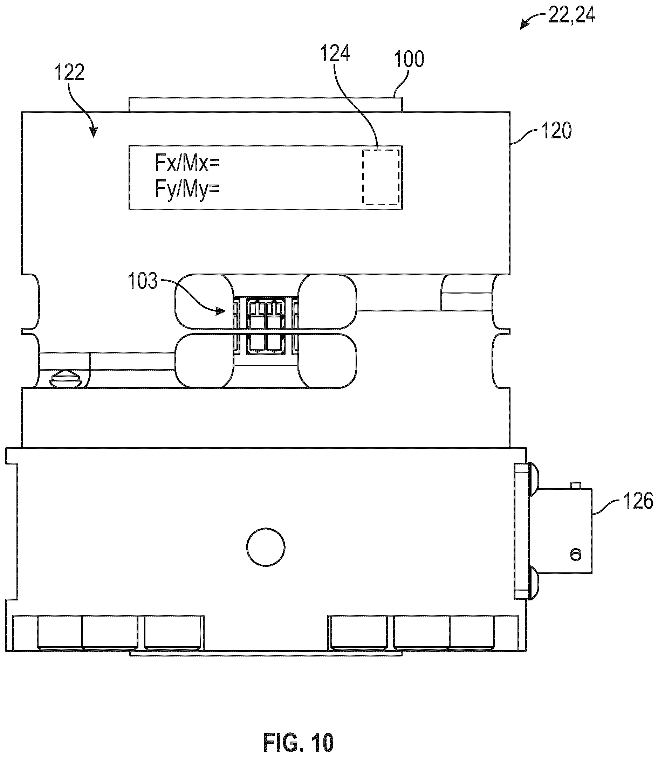

A load cell 22, 24 with moment restraint 120 is shown in isometric view in FIG. 9 and in front elevation view in FIG. 10. A representative display 122 showing a user representative forces in the x-direction and y-direction is shown in FIGS. 9-10. Such a display 124 may be powered in some embodiments by a battery or other power supply 124. The battery or other power supply 124 further providing electrical power to the sensors such as the sensors 104,106 herein depicted by example. In the alternative or in addition, a connector 126 for outputting sensor measurements from sensors 104, 106 can be provided in one embodiment, herein mounted to the load cell body 100. The sensors lines run from sensors 104, 106 through body 100 to connector 126, and then along connections such as 22A, 24A as shown in FIG. 1.

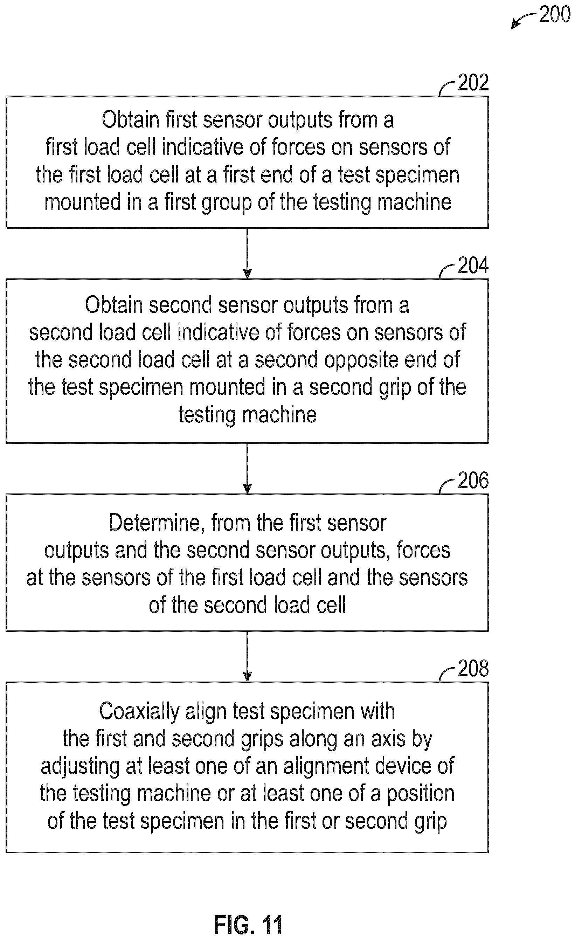

A method 200 of operating a tensile testing machine such as machine 12 is shown in FIG. 11. Method 200 comprises in one embodiment obtaining first sensor outputs from a first load cell 22 indicative of forces on sensors 104, 106 of the first load cell 22 at a first end of a test specimen 18 mounted in a first grip 26A of the testing machine 12 in block 202. In block 204, the method further comprises obtaining second sensor outputs from a second load cell 24 indicative of forces on sensors 104, 106 of the second load cell 24 at a second opposite end of the test specimen 18 mounted in a second grip 26B of the testing machine 12. In block 206 it is determined, from the first sensor outputs and the second sensor outputs, forces at the sensors of the first load cell 22 and the sensors of the second load cell 24. In block 208, the test specimen 18 is coaxially aligned with the first and second grips 26A, 26B along an axis by adjusting at least one of an alignment device of the testing machine or at least one of a position of the test specimen in the first or second grip.

Coaxially aligning at an alignment device of the testing machine comprises in one embodiment adjusting proximate a crosshead of the testing system. This may include adjusting laterally in at least one of two directions each orthogonal to the axis 102 and to each other. Coaxial aligning the test specimen comprises in one embodiment adjusting the test specimen orientation or angle in at least one of the first or second grips of the testing machine to within a tolerance of the testing machine. The tolerance may be predetermined, and one or more displays such as display 122 may be used on the testing machine, a GUI of the testing machine, or the load cells themselves to indicate the alignment and suggest adjustments thereto for adjusting to within a tolerance of the testing machine.

Obtaining first sensor outputs from a first load cell indicative of forces on sensors of the first load cell at the first end of the test specimen comprises in one embodiment sensing first forces in a first lateral direction and a second lateral direction orthogonal to the first lateral direction. Forces on sensors of the first load cell may be sensed with strain gauges or other strain measurement devices. Obtaining second sensor outputs from a second load cell indicative of forces on sensors of the second load cell at a second opposite end of the test specimen comprises in one embodiment sensing second forces in the first lateral direction and the second lateral direction. Forces on sensors of the second load cell may be sensed with strain gauges or other force measurement devices. Coaxially aligning comprises in one embodiment reducing lateral forces in at least one of the first and the second lateral directions.

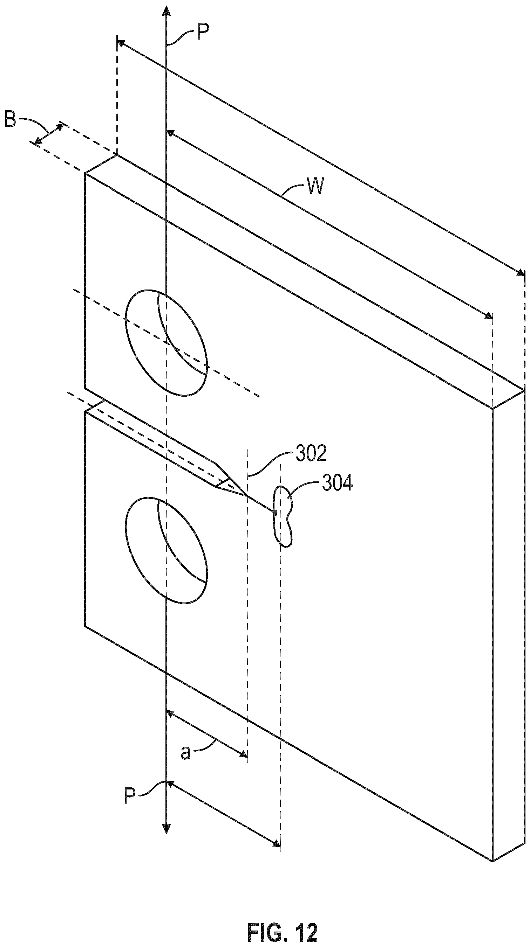

Misalignment can be due to shifting of the test specimen in at least one grip, or mismounting of the test specimen in at least one grip. Moment changes during testing may also be used to identify failure of a specimen. An example of monitoring during testing is propagation of a crack in an asymmetrical specimen such as is shown in FIG. 12. In FIG. 12, an asymmetrical design has a normal flex point at 302 which through repeated tensile testing may extend a crack to a point 304 within the specimen. This would result in different moments and forces measured by the testing system, and could alert a user to a change such as the partial or imminent failure of the specimen. Alternatively, at the conclusion of a test, a moment change or displacement change may indicate motion of the specimen with respect to a grip, or wear or damage to a grip itself.

Embodiments of the present disclosure therefore provide methods and systems for sensing lateral forces and adjusting alignment of a test specimen or elements of a testing machine.

The above-disclosed subject matter is to be considered illustrative, and not restrictive, and the appended claims are intended to cover all such modifications, enhancements, and other embodiments, which fall within the true scope of the present disclosure. Thus, to the maximum extent allowed by law, the scope of the present disclosure is to be determined by the broadest permissible interpretation of the following claims and their equivalents, and shall not be restricted or limited by the foregoing detailed description.

## Claims

1. A method of operating a testing machine, comprising:
obtaining first sensor outputs from a first load cell indicative of forces on sensors of the first load cell at a first end of a test specimen mounted in a first grip of the testing machine;
obtaining second sensor outputs from a second load cell indicative of forces on sensors of the second load cell at a second opposite end of the test specimen mounted in a second grip of the testing machine;
determining, from the first sensor outputs and the second sensor outputs, forces at the sensors of the first load cell and the sensors of the second load cell; and
coaxially aligning the test specimen with the first and second grips along an axis by adjusting at least one of an alignment device of the testing machine or at least one of a position of the test specimen in the first or second grip.

2. The method of claim 1, wherein coaxially aligning at an alignment device of the testing machine comprises moving one of the first or the second grips of the testing machine, such as adjusting one of the first and second grips laterally in at least one of two directions orthogonal to the axis; and/or adjusting the test specimen orientation or angle in at least one of the first or second grips to within a tolerance of the testing machine.

3. The method of claim 1, wherein obtaining first sensor outputs from a first load cell indicative of forces on sensors such as strain gauges of the first load cell at a first end of a test specimen comprises sensing a first force in a first lateral direction and a second lateral direction orthogonal to the first lateral direction.

4. The method of claim 3, wherein obtaining second sensor outputs from a second load cell indicative of forces on sensors such as strain gauges of the second load cell at a second opposite end of the test specimen comprises sensing second forces in the first lateral direction and the second lateral direction.

5. The method of claim 3, wherein coaxially aligning comprises reducing lateral forces in at least one of the first and the second lateral directions.

6. The method of claim 1, and further comprising applying a load to the test specimen.

7. The method of claim 6, and further comprising measuring lateral forces on the test specimen during testing and/or after testing to determine misalignment.

8. The method of claim 6, and further comprising determining a type of bend in the test specimen using determined moments from the first sensor outputs and the second sensor outputs.

9. The method of claim 8, wherein determining a type of bend comprises determining an "S" type bend from moments at opposite ends of the test specimen that are in opposite directions and determining a "C" type bend from moments at opposite ends of the test specimen that are in a same direction.

10. A load cell body for use in a tensile testing machine, comprising:
a body portion configured to engage a grip at a first end thereof and one of a load cell for the tensile testing machine or an actuator for the tensile testing machine at a second end, opposite the first end, along an axis extending from the first end to the second end, the load cell body comprising a flexure joined to and extending along the axis, the flexure being compliant for a first force in a first lateral direction orthogonal to the axis and compliant for a second force in a second lateral direction orthogonal to the first lateral direction and orthogonal to the axis, and the flexure being stiff for forces along the axis.

11. The load cell body of claim 10 and further comprising:
a set of first sensors operably coupled to the flexure and configured to sense the first force in the first lateral direction orthogonal to the axis; and
a set of second sensors operably coupled to the flexure and configured to sense the second force in the second lateral direction orthogonal to the first lateral direction and orthogonal to the axis.

12. The load cell body of claim 10, wherein the set of first sensors are strain gauges.

13. The load cell body of claim 10, wherein the set of second sensors are strain gauges.

14. The load cell body of claim 10, and further comprising a moment restraint connected to the first end and the second end, the moment restraint configured to inhibit rotation of the first end or the second end about the axis.

15. A method of alignment of a test specimen in a testing machine, comprising:
mounting the test specimen in grips of the testing machine;
applying a load to the test specimen; and
measuring lateral forces on the test specimen during testing and/or after testing to determine misalignment.
